# EUROPÄISCHE PATENTSCHRIFT

(11) **EP 3 291 941 B1**
(45) Veröffentlichungstag und Bekanntmachung des Hinweises auf die Patenterteilung: **12.09.2018**
(21) Anmeldenummer: 16718659.2
(22) Anmeldetag: 25.04.2016
(51) Int. Cl.: B23K 26/38, B23K 26/08, B23K 26/14

(54) **SCHNEIDGASDÜSE UND LASERSCHNEIDVERFAHREN MIT VERSCHIEBBARER HÜLSE ZUM EINSTELLEN DER STRÖMUNGSCHARAKTERISTIK**
CUTTING GAS NOZZLE AND LASER CUTTING METHOD HAVING A DISPLACEABLE SLEEVE FOR SETTING THE FLOW CHARACTERISTICS
BUSE À GAZ DE DÉCOUPE ET PROCÉDÉ DE DÉCOUPE AU LASER FAISANT APPEL À UNE DOUILLE COULISSANTE POUR RÉGLER LA CARACTÉRISTIQUE D'ÉCOULEMENT

(30) Priorität: 04.05.2015 DE 102015208157
(43) Veröffentlichungstag der Anmeldung: 14.03.2018
(73) Patentinhaber: Trumpf Werkzeugmaschinen GmbH + Co. KG, 71254 Ditzingen (DE)
(72) Erfinder: BEA, Martin, 70806 Kornwestheim (DE); HESSE, Tim, 71254 Ditzingen (DE)
(74) Vertreter: Kohler Schmid Möbus Patentanwälte
(86) Internationale Anmeldenummer: PCT/EP2016/059158
(87) Internationale Veröffentlichungsnummer: WO 2016/177596

(56) Entgegenhaltungen:
- EP-A1- 1 669 159
- DE-A1- 10 041 276
- DE-C1- 19 853 735
- JP-A- H10 216 978
- JP-A- 2012 030 249

## Beschreibung

Die Erfindung betrifft eine Schneidgasdüse für einen Laserbearbeitungskopf mit einer Innendüse zur Ausbildung einer Kernströmung und mit einer die Innendüse umgebenden Ringspaltdüse zur Ausbildung einer Ringströmung, sowie auch ein Verfahren zum Laserschneiden eines Werkstücks mit einer gasbeaufschlagten Schneidgasdüse.

Eine derartige Schneidgasdüse ist beispielsweise aus der JPH10216978A oder aus der DE 198 53 735 C1 bekannt geworden.

Für das Schneiden unterschiedlicher Materialien (Baustahl, Edelstahl, Aluminium, ...) in unterschiedlicher Materialstärke mit Hilfe eines Laserstrahls werden verschiedene Schneidgasdüsen benötigt, die unterschiedliche Außen- oder Innenkonturen, unterschiedlich geformte Düsenöffnungen und unterschiedliche Düsendurchmesser aufweisen.

Um diese Vielfalt sowie die Häufigkeit eines notwendigen Düsenwechsels zu reduzieren, ist aus JPH10216978A eine Schneidgasdüse für einen Laserbearbeitungskopf bekannt, die durch eine Innendüse ein Schneidgas und durch eine die Innendüse umgebende Ringspaltdüse ein Hilfsgas auf die Prozessstelle lenkt. Die Ringspaltdüse kann mit Hilfe eines Schraubgewindes relativ zur Innendüse axial vor und zurück geschoben werden, um die Düsenöffnung (die Düsenquerschnittsfläche) der Ringspaltdüse zu verändern und somit die Gasströmung des Hilfsgases zu beeinflussen.

Aus DE 198 53 735 C1 ist ein Laserbearbeitungskopf bekannt, bei dem eine Schneidgasdüse mit einer Innendüse und mit einer Ringspaltdüse in einem verschiebbar geführten Hohlkolben angeordnet ist. Im Betrieb des Laserbearbeitungskopfs bildet sich ein Gaspolster zwischen der Werkstückoberfläche und der Stirnfläche des Hohlkolbens. Mit Hilfe des Gasdrucks kann das Spaltmaß zwischen der Werkstückoberfläche und der Stirnfläche des Hohlkolbens eingestellt werden, wobei die Innendüse und die Ringspaltdüse mit unterschiedlichen Drücken beaufschlagt werden können.

Der vorliegenden Erfindung liegt die Aufgabe zugrunde, eine Schneidgasdüse der eingangs genannten Art derart weiterzubilden, dass die Strömungsverhältnisse von Kern- und Ringströmung während des Schneidprozesses - ohne die Notwendigkeit einer Änderung des Gasdrucks - geändert bzw. geregelt werden können, sowie ein Verfahren zum Laserschneiden mit einer solchen Schneidgasdüse anzugeben.

Diese Aufgabe wird erfindungsgemäß dadurch gelöst, dass in dem Ringspalt der Ringspaltdüse eine Hülse axial verschiebbar zwischen einer hinteren und einer vorderen Stellung geführt ist, die zumindest in der vorderen Stellung über die Innendüse vorsteht und die die Düsenquerschnittsfläche der Ringspaltdüse in den beiden Stellungen unterschiedlich weit freigibt, insbesondere in ihrer einen (hinteren oder vorderen) Stellung die Ringspaltdüse weitgehend oder vollständig verschließt und in ihrer anderen (hinteren oder vorderen) Stellung die Ringspaltdüse freigibt.

Erfindungsgemäß können durch Verschieben der Hülse innerhalb des Ringspalts die strömungsmechanischen Eigenschaften der Schneidgasdüse von der Charakteristik einer Einlochdüse (Einkanaldüse), bei der das Schneidgas nur aus der Innendüse ausströmt, bis hin zu der einer Nebenstromdüse (Mehrkanaldüse), bei der das Schneidgas sowohl aus der Innendüse als auch aus der Ringspaltdüse ausströmt, variiert werden. Die Einlochdüse ist hauptsächlich für die Dünnblechbearbeitung und das Einstechen und die Nebenstromdüse vor allem für die Dickblechbearbeitung vorteilhaft. Mit der erfindungsgemäßen Schneidgasdüse können somit unterschiedlich dicke Werkstücke geschnitten und insbesondere auch unterschiedliche Bearbeitungsverfahren realisiert werden. Die Flexibilität der erfindungsgemäßen Schneidgasdüse ermöglicht eine Reduzierung der Variantenvielfalt der bisher benötigten Schneiddüsen beim Anwender wie auch bei der Ersatzteilhaltung. Weiterhin können unproduktive Stillstandzeiten der Maschine während eines Düsenwechsels minimiert werden.

Die Innendüse und die Ringspaltdüse sind in einem Düsenkörper ausgebildet und können entweder voneinander separate Gasanschlüsse oder, sofern eine Düsenbohrung der Innendüse und der Ringspalt der Ringspaltdüse über mindestens eine Verbindungsbohrung des Düsenkörpers miteinander verbunden sind, einen gemeinsamen Gasanschluss aufweisen. Im letzteren Fall ist vorteilhaft die Düsenbohrung der Innendüse mit dem Gasanschluss verbunden und der Ringspalt über die Verbindungsbohrung(en) an die Düsenbohrung angeschlossen.

Besonders bevorzugt verbleibt in der hinteren Stellung der Hülse zwischen der hinteren Stirnfläche der Hülse und dem Düsenkörper ein Ringraum, der, insbesondere über einen zwischen Düsenkörper und Hülse vorhandenen Führungsspalt, mit der Außenumgebung verbunden ist, wobei die mindestens eine Verbindungsöffnung als eine sich bis in den Ringraum erstreckende Öffnung ausgebildet ist. Durch den in jeder Hülsenstellung vorhandenen Ringraum und die damit kommunizierende(n) Öffnung(en) ist es möglich, die Hülse aus einer vorgeschobenen Stellung durch eine gezielte Wahl des Gasdrucks bis in ihre hintere Endstellung zu saugen.

In einer anderen Ausführungsform, bei der die Düsenbohrung der Innendüse und der Ringspalt der Ringspaltdüse nicht durch Öffnungen miteinander verbunden sind, ist ein zwischen der hinteren Stirnfläche der Hülse und dem Düsenkörper vorhandener Ringraum, insbesondere über einen zwischen Düsenkörper und Hülse vorhandenen Führungsspalt, mit der Außenumgebung verbunden. Durch den Venturi-Effekt des aus der Innendüse strömenden Schneidgases wird Luft (Sauerstoff) aus der Außenumgebung angesaugt, die sich innerhalb der Hülse mit dem Stickstoff-Schneidgasstrahl in günstiger Weise vermischt.

Vorheilhaft kann über die konstruktive Gestaltung der Hülse der Anpressdruck der Hülse auf der Werkstückoberfläche gezielt eingestellt werden. Ist derjenige Oberflächenteil der Hülse, auf den der Schneidgasdruck in Vorwärtsrichtung wirkt, größer als derjenige Oberflächenteil der Hülse, auf den - insbesondere bei auf eine Werkstückoberfläche aufgesetzter Hülse - der Schneidgasdruck in Rückwärtsrichtung wirkt, so bewirkt der Schneidgasdruck grundsätzlich eine Anpresskraft der Hülse auf die Werkstückoberfläche. Alternativ kann derjenige Oberflächenteil der Hülse, auf den der Schneidgasdruck in Vorwärtsrichtung wirkt, gleich groß wie oder (etwas) kleiner als derjenige Oberflächenteil der Hülse sein, auf den bei auf eine Werkstückoberfläche aufgesetzter Hülse der Schneidgasdruck in Rückwärtsrichtung wirkt. In diesem Fall halten sich die durch den Schneidgasdruck auf die Hülse wirkenden Auftriebs- und Anpresskräfte unabhängig vom absoluten Gasdruckniveau gerade die Waage oder es stellt sich eine geringe Auftriebskraft ein, so dass die Hülse im Idealfall reibungsfrei, aber trotzdem ständig flächig aufliegend über eine ebene Werkstückoberfläche gleitet oder sich ein minimaler Spalt zwischen der Stirnfläche der Hülse und der Werkstückoberfläche einstellt, so dass die Hülse über der Werkstückoberfläche schwebt. Letztere Ausgestaltung der Hülse ist besonders vorteilhaft für eine kratzerfreie Schneidbearbeitung.

Besonders vorteilhaft ist die Innenwand des Ringspalts durch die insbesondere konische Außenseite der Innendüse gebildet. Weiterhin vorteilhaft ist die Hülse an der Außenwand des Ringspalts verschiebbar geführt.

Bei Ausführungsformen, bei denen die Hülse in ihrer einen (End)Stellung die Ringspaltdüse verschließt, ist im Ringspalt ein Ventilsitz angeordnet, an dem die Hülse in ihrer die Ringspaltdüse verschließenden Stellung anliegt.

In einer ersten Weiterbildung dieser Ausführungsform ist der Ventilsitz in der hinteren (End)Stellung der Hülse geschlossen und in der vorderen (End)Stellung der Hülse geöffnet. Der Ventilsitz kann beispielsweise durch einen konischen Wandabschnitt oder einen Ringabsatz des Ringspalts gebildet sein. Der Ventilsitz ist an der Innenwand des Ringspalts angeordnet, aber kann im Falle des Ringabsatzes auch am Grund des Ringspalts gebildet sein. Der konische Wandabschnitt verjüngt sich in Vorwärtsrichtung der Hülse.

In einer zweiten Weiterbildung dieser Ausführungsform ist der Ventilsitz in der vorderen (End)Stellung der Hülse geschlossen und in der hinteren (End)Stellung der Hülse geöffnet. Der Ventilsitz kann beispielsweise durch einen konischen Wandabschnitt oder einen Ringabsatz des Ringspalts gebildet sein, wobei die Hülse eine den Ventilsitz in Rückwärtsrichtung hintergreifende Dichtfläche aufweist. Der konische Wandabschnitt verjüngt sich in Rückwärtsrichtung der Hülse.

Eine mit dem Ventilsitz zusammenwirkende Dichtfläche der Hülse kann an der Hülse einteilig angeformt oder durch einen separaten Dichtring gebildet sein. Im letzteren Fall können die Hülse und der Dichtring aus unterschiedlichen Materialien gefertigt sein, also z.B. eine Hülse aus Keramik und ein Dichtring aus Metall, wodurch die Herstellkosten für die Hülse gesenkt werden und der Dichtring eine präzisere Dichtfläche aufweist als eine einteilige Hülse aus Keramik.

Besonders bevorzugt ist die Hülse im Ringspalt mit einem solchen seitlichen Spiel ("schwimmend") gelagert, dass die Hülse innerhalb des Ringspalts um z.B. ±5° verkippbar gelagert ist. Auf diese Weise kann die Schneidgasdüse auf Unebenheiten der Werkstückoberfläche durch Verkippung reagieren, ohne mechanisch beschädigt zu werden oder den formschlüssigen Kontakt zu einer ebenen, aber leicht verkippten Blechoberfläche zu verlieren. Vorteilhaft kann die Hülse einen außen umlaufenden, spitzen oder balligen Zentrierbund aufweisen, der an der Außenwand des Ringspalts verschiebbar geführt und verkippbar gelagert ist. Alternativ oder zusätzlich können sich die Außenwand des Ringspalts in Vorwärtsrichtung und/oder die Hülsenaußenseite in Rückwärtsrichtung, insbesondere konisch, verjüngen, um das Verkippen der Hülse innerhalb des Ringspalts um ca. ±5° zu ermöglichen.

Um über leichte Stufen in der Werkstückoberfläche, wie sie z.B. durch das Kippen freigeschnittener Werkstückteile auftreten können, ohne Beschädigung hinweg gleiten zu können, weist die vordere Stirnfläche der Hülse vorzugsweise innen- und/oder außenseitig eine Anlaufschräge, z.B. in Form einer 45°-Fase, auf.

Besonders bevorzugt ist die Hülse aus Keramik (z.B. Aluminiumoxid), da Keramik hochfrequenztechnisch ausreichend neutral bzw. elektrisch nichtleitend ist, so dass die erfindungsgemäße Schneidgasdüse durch die kapazitive Abstandssensorik des Laserbearbeitungskopfs wie eine gewöhnliche Nebenstromdüse (eine Düse ohne integrierte Hülse) behandelt werden kann. Weiterhin gewährleisten der hohe Schmelzpunkt und die hohe Abriebfestigkeit von Keramik eine ausreichend hohe Lebensdauer der Hülse. Statt aus Keramik kann die Hülse aber auch aus einem vergleichbar temperaturbeständigen und elektrisch nichtleitenden Material oder einem bis mindestens 100 °C temperaturbeständigen Kunststoff gebildet sein. Im letzteren Fall sind die Gleiteigenschaften, die Festigkeit und eine Temperaturbeständigkeit (Dauergebrauchstemperatur) bis mindestens 100°C wichtig. Der Reibungskoeffizient bei Bewegung über trockenen Stahl sollte < 0,3 sein. Außerdem muss die relative Dielektrizitätskonstante bei 10⁶ Hz unter 3 liegen. Diese Anforderungen werden beispielsweise von Teflon erfüllt.

Vorzugsweise weist die Hülse in ihrer vorderen Stirnfläche mindestens eine, bevorzugt mehrere schräg zur Radialrichtung verlaufende Nuten oder in ihrer Hülsenwand mindestens eine, bevorzugt mehrere schräg zur Radialrichtung verlaufende Bohrungen auf. Durch die schräge bzw. spiralförmige Ausrichtung der Nuten und Bohrungen übt der Impuls des abströmenden Schneidgases ein Drehmoment auf die Hülse aus, die dadurch in Rotation versetzt wird. Alternativ kann die Hülse auch in ihrer Hülsenwand außenseitig mindestens eine, bevorzugt mehrere schräg zur Axialrichtung verlaufende Nuten aufweisen, so dass die Hülse durch die außen an der Hülse axial entlangströmende Luft oder das außen an der Hülse entlang strömende Prozess- bzw. Schutzgas in Rotation versetzt wird. Durch die rotierende Hülse können beispielsweise Verunreinigen der Werkstückoberfläche beseitigt werden sowie durch mindestens eine, bevorzugt mehrere Bohrungen oder Nuten in der Hülsenwand gezielt eine Modulation des Gasdrucks innerhalb der unter der Hülse befindlichen Prozesszone bewirkt werden.

Die erfindungsgemäße Schneidgasdüse kann vorteilhaft beispielsweise zum Stickstoff-Hochdruck-Laserschneiden von mehrlagigen Blechstapeln insbesondere dünner Bleche (Baustahl, Edelstahl, Aluminium) genutzt werden. Das innerhalb der Hülse gebildete Luftkissen bewirkt eine Anpresskraft auf den Werkstückstapel, die während des Schneidprozesses ein Auffächern der einzelnen Werkstücke verhindert. Dabei übt das Gaspolster unter der Hülse eine flächenhaft wirkende Anpresskraft auf den Blechstapel aus, so dass im Bereich des Laserstrahls (im Gegensatz zu lokal begrenzt aufgebrachten Andruckkräften durch räumlich eng begrenzte Gasstrahlen) keine Momente auf die Blechoberfläche wirken und kein lokal begrenztes Absinken in Kombination mit einem Aufwölben der einzelnen Bleche resultiert. So können weder Schneidgas noch Schmelze in die Zwischenräume zwischen den einzelnen, gestapelten Werkstücken eindringen. Die spaltfrei gestapelten Einzel-Schnittkanten wirken dann auf den Schneidgasstrahl wie eine gemeinsame, homogene Schnittkante, so dass eine einheitlich hohe, gratfreie Schnittkantenqualität über alle gestapelten Werkstücke hinweg erreicht werden kann. Aufgrund der durch die Hülse bewirkten verbesserten Einleitung des Schneidgases in den Schnittspalt kann mit um den Faktor 3-5 geringeren Schneidgasdrücken geschnitten werden als mit Standard-Schneidgasdüsen. Der statische Gasdruck im Schnittspalt, welcher zu einem Auseinanderklaffen der einzelnen Werkstücke des Stapels führen kann, ist also ebenfalls um einen Faktor 3-5 geringer als bei Verwendung konventioneller Düsen, so dass die Wahrscheinlichkeit eines Auffächerns des Blechstapels durch den Schneidgasdruck im Schnittspalt verringert wird.

Die Erfindung betrifft auch ein Verfahren zum Laserschneiden eines Werkstücks mit einer oben beschriebenen, gasbeaufschlagten Schneidgasdüse, wobei ein Laserstrahl durch die Innendüse auf das Werkstück gerichtet wird und wobei die Hülse mechanisch durch Kontakt mit der Werkstückoberfläche oder pneumatisch in eine Arbeitsstellung verschoben wird.

In einer Verfahrensvariante wird die Hülse durch den Schneidgasdruck in einer Vorwärtsrichtung vorgeschoben und durch unterschiedlich weites Absenken der Schneidgasdüse auf das Werkstück zurückgeschoben.

Das Zurückschieben der Hülse nach hinten (d.h. in den Düsenkörper hinein) wird durch den Kontakt der vorderen Hülsenstirnfläche mit der Werkstückoberfläche bewirkt: Durch eine vertikale Bewegung der Schneidgasdüse bzw. des die Schneidgasdüse tragenden Laserbearbeitungskopfs in Richtung auf die Werkstückoberfläche wird die Hülse auf das Werkstück gedrückt und auf diese Weise innerhalb des Ringspalts nach hinten geschoben. Es resultiert ein über den Abstand zwischen dem Laserbearbeitungskopf (und damit der Schneidgasdüse) und der Werkstückoberfläche steuerbares Verhältnis zwischen Kernströmung durch die Innendüse und Mantelströmung durch den Ringspalt. Die strömungsmechanischen Eigenschaften der Schneidgasdüse können also beispielsweise beim Wechsel zwischen Einstechen und Schneiden oder auch während des laufenden Schneidprozesses NC-gesteuert über den vertikalen Abstand des Laserbearbeitungskopfs von der Werkstückoberfläche von der Charakteristik einer Einkanaldüse zu der einer Mehrkanaldüse variiert werden. Wenn die Hülse auf der Werkstückoberfläche aufgesetzt ist, kann sie auf der Werkstückoberfläche gleiten, und es bildet sich zwischen Hülse und Werkstückoberfläche ein (nahezu) gasdicht abgeschlossener Hohlraum, der zusätzlich die Einkopplung des Schneidgases in den Schnittspalt verbessert. Ein seitliches Abströmen des Schneidgases über die Blechoberfläche hinweg wird verhindert, und der Schneidgasverbrauch wird reduziert.

Das Vorschieben der Hülse nach vorn erfolgt druckgesteuert mit Hilfe des auf die Hülse einwirkenden Schneidgases. Ist die hintere Hülsenstirnfläche beispielsweise deutlich größer ausgestaltet als die vordere Hülsenstirnfläche, so bewirkt das Verhältnis der auf die vordere bzw. die hintere Stirnfläche der Hülse wirkenden Druckkräfte des Schneidgases eine resultierende Kraft nach vorne und dadurch resultierend bei auf der Werkstückoberfläche aufgesetzter Hülse eine Anpresskraft auf das Werkstück.

In einer anderen Verfahrensvariante mit einer Schneidgasdüse, bei der die mindestens eine Verbindungsöffnung mit einem Ringkanal zwischen dem Düsenkörper und der hinteren Stirnfläche der Hülse kommuniziert, wird die Hülse in einer Vorwärtsrichtung vorgeschoben, wenn der Schneidgasdruck über einem Grenzwert liegt, und in einer Rückwärtsrichtung zurückgezogen, wenn der Schneidgasdruck unter dem Grenzwert liegt.

In einer noch anderen Verfahrensvariante mit einer Schneidgasdüse, bei der die Düsenbohrung der Innendüse und der Ringspalt der Ringspaltdüse nicht miteinander verbunden sind, wird bei freigegebener Düsenquerschnittsfläche der Ringspaltdüse Umgebungsluft von der Kernströmung in den Ringraum gesaugt, die dann zusammen mit der Kernströmung aus der Schneidgasdüse austritt.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a, 1b: eine erste erfindungsgemäße Schneidgasdüse mit einer Ringspaltdüse, die in Fig. 1a in ihrer geschlossenen Endstellung und in Fig. 1b in ihrer geöffneten Endstellung gezeigt ist;
- Fign. 2a, 2b: eine zweite erfindungsgemäße Schneidgasdüse mit einer Ringspaltdüse, die in Fig. 2a in ihrer geschlossenen Endstellung und in Fig. 2b in einer geöffneten Stellung gezeigt ist;
- Fign. 3a, 3b: eine dritte erfindungsgemäße Schneidgasdüse mit einer Ringspaltdüse, die in Fig. 3a in ihrer geschlossenen Endstellung und in Fig. 3b in einer geöffneten Stellung gezeigt ist;
- Fign. 4a, 4b: eine vierte erfindungsgemäße Schneidgasdüse mit einer Ringspaltdüse, die in Fig. 4a in ihrer einen und in Fig. 4b in ihrer anderen Endstellung gezeigt ist; und
- Fign. 5a-5d: verschiedene Modifikationen einer in den Fign. 1 bis 4 gezeigten Hülse, in einer Draufsicht auf die vordere Hülsenstirnseite (Fig. 5a), in einer Querschnittansicht (Fign. 5b, 5d) und in einer perspektivischen Seitenansicht (Fig. 5c).

In der folgenden Beschreibung der Zeichnung werden für gleiche bzw. funktionsgleiche Bauteile identische Bezugszeichen verwendet.

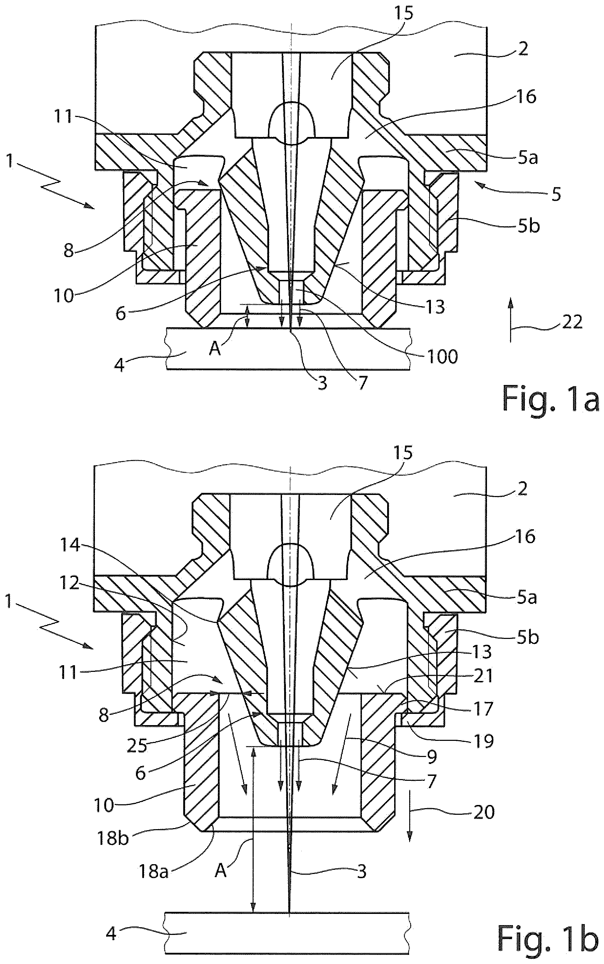

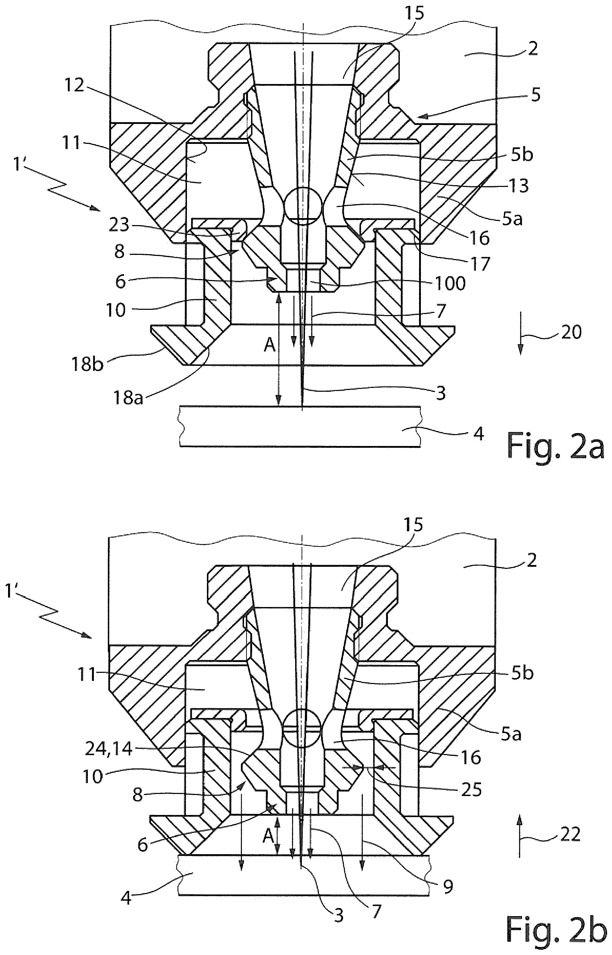

Die in **Fign. 1a, 1b** **und** **2a, 2b** gezeigten Schneidgasdüsen **1, 1'** sind an einem Laserbearbeitungskopf **2** angeordnet und dienen dazu, ein Schneidgas auf ein mittels eines Laserstrahls **3** bearbeitetes Werkstück (z.B. Blech) **4** zu richten. Solche Schneidgasdüsen 1, 1' können beispielsweise an einer Laserbearbeitungsmaschine, wie sie in der DE 10 2013 210 844 B3 offenbart ist, eingesetzt werden.

Die Schneidgasdüsen 1, 1' umfassen jeweils einen Düsenkörper **5** mit einer Innendüse **6** zur Ausbildung einer Kernströmung **7** und mit einer die Innendüse 6 umgebenden Ringspaltdüse **8** zur Ausbildung einer Ringströmung **9,** sowie eine über die Innendüse 6 vorstehende, als Ventilhülse ausgebildete Hülse **10,** die in dem Ringspalt **11** der Ringspaltdüse 8 axial verschiebbar zwischen zwei Stellungen geführt ist und die zumindest in einer Stellung über die innendüse 6 vorsteht. Die bevorzugt als Keramikhülse ausgestaltete Ventilhülse 10 verschließt in der einen Stellung die Düsenquerschnittsfläche **25** der Ringspaltdüse 8 und gibt in der anderen Stellung die Düsenquerschnittsfläche 25 der Ringspaltdüse 8 frei. Die Ventilhülse 10 ist an der Außenwand **12** des Ringspalts 11 verschiebbar geführt. An der Innenwand **13** des Ringspalts 11, die durch die Außenseite der Innendüse 6 gebildet ist, ist ein Ventilsitz **14** ausgebildet, an dem die Ventilhülse 10 in ihrer die Ringspaltdüse 8 verschließenden Endstellung anliegt. Die Innendüse 6 ist über ihre zentrale Düsenbohrung **15** an eine Gaszufuhr (nicht gezeigt) angeschlossen. Der Ringspalt 11 ist über eine oder mehrere Verbindungsöffnungen **16** an die Düsenbohrung 15 angeschlossen. Der Laserstrahl 3 wird durch die Düsenaustrittsöffnung **100** der Innendüse 6 auf das Werkstück 4 gerichtet.

Die Ventilhülse 10 ist mit einem eng tolerierten, außen umlaufenden Zentrierbund **17** ausgebildet, der an der Außenwand 12 des Ringspalts 11 verschiebbar und weitestgehend abgedichtet geführt ist. Ein mechanisches Spiel zwischen der Außenwand 12 des Ringspalts 11 und dem nach außen spitzen oder balligen Zentrierbund 17 ermöglicht eine Verkippung der Ventilhülse 10 innerhalb des Ringspalts 11 um ca. ±5°. Auf diese Weise können beim Bewegen der Ventilhülse 10 auf dem Werkstück 4 Unebenheiten der Werkstückoberfläche ausgeglichen werden. Um über leichte Stufen in der Werkstückoberfläche, wie sie z.B. durch das Kippen freigeschnittener Werkstückteile auftreten können, ohne Beschädigung hinweg gleiten zu können, weist die vordere Stirnfläche der Ventilhülse 10 innen- und außenseitig jeweils eine umlaufende Anlaufschräge **18a, 18b** in Form einer Fase mit einem Fasenwinkel zwischen 30° und 60°, insbesondere mit einem Fasenwinkel von 45°, auf.

Bei der in Fign. 1a, 1b gezeigten Schneidgasdüse 1 umfasst der Düsenkörper 5 einen in den Laserbearbeitungskopf 2 eingeschraubten Hauptkörper **5a** (z.B. aus Kupfer), der die wahlweise eingeschraubte oder einstückig mit dem Hauptkörper 5a ausgebildete Innendüse 6 und die Ringspaltdüse 8 aufweist, sowie eine außen auf den Hauptkörper 5a aufgeschraubte Sicherungsmutter **5b** (z.B. aus Kupfer), die einen radial nach innen in den Ringspalt 11 vorstehenden Sicherungsrand **19** aufweist. Der Sicherungsrand 19 hält die Ventilhülse 10 unverlierbar im Ringspalt 11 und bildet einen Endanschlag, an dem die Ventilhülse 10 mit ihrem Zentrierbund 17 in ihrer vorderen Endstellung anliegt. Der Ventilsitz 14 ist durch die in Vorwärtsrichtung **20** der Ventilhülse 10 konisch zulaufende Innenwand 13 des Ringspalts 11 gebildet und bildet zusammen mit der Ventilhülse 10 ein Ringspaltventil.

In der in Fig. 1a gezeigten hinteren Endstellung der Ventilhülse 10 (Abstand **A** der Innendüse 6 zum Werkstück 4: ca. 0 bis 1 mm) sitzt die Ventilhülse 10 auf dem Werkstück 4 auf und liegt mit der Innenkante ihrer Hülsenbohrung auf dem Ventilsitz 14 dichtend an, wodurch das Ringspaltventil und damit die Düsenquerschnittsfläche 25 der Ringspaltdüse 8 verschlossen sind. Das aus dem Laserbearbeitungskopf 2 in die Schneidgasdüse 1 einströmende Schneidgas kann nur durch die zentrale Düsenaustrittsöffnung 100 der Innendüse 6 als Kernströmung 7 ausströmen. Diese Einlochdüse (Einkanaldüse) ist z.B. bei der Dünnblechbearbeitung erwünscht.

Wenn die Ventilhülse 10 aus ihrer hinteren Endstellung nach vorne geschoben wird, hebt sie vom Ventilsitz 14 ab, und das Ringspaltventil öffnet. Dabei entsteht mit zunehmendem Vorschieben der Ventilhülse 10 ein zunehmend breiterer Spalt zwischen Ventilhülse 10 und Innenwand 13, d.h. eine zunehmend breitere Düsenöffnung 25, so dass ein zunehmender Anteil des Schneidgases nicht mehr durch die Düsenaustrittsöffnung 100 der Innendüse 6, sondern über die Verbindungsöffnungen 16 in den Ringspalt 11 und von dort durch die Ringspaltdüse 8 als Ringströmung 9 ausströmt. Diese Nebenstromdüse (Mehrkanaldüse), bei der das Schneidgas sowohl aus der Innendüse 6 als auch aus der Ringspaltdüse 8 ausströmt, ist vor allem beim Schneiden dicker Werkstücke erwünscht. In Fig. 1b ist die Ventilhülse 10 in ihrer vorderen Endstellung gezeigt, wobei der Abstand A der Innendüse 6 zum Werkstück 4 um mindestens den Verschiebeweg der Ventilhülse 10 zwischen ihren beiden Endstellungen größer als in der hinteren Endstellung ist.

Die hintere Stirnfläche **21** der Ventilhülse 10 ist wegen des Zentrierbundes 17 deutlich größer als die vordere Stirnfläche, gebildet aus der Teilfläche 18a, so dass die Druckdifferenz zwischen dem Düseninneren und der Umgebung das Vorschieben der Ventilhülse 10 in Vorwärtsrichtung 20 und bei bereits auf der Werkstückoberfläche aufgesetzter Ventilhülse 10 eine Anpresskraft der Ventilhülse 10 auf die Werkstückoberfläche bewirkt, die proportional zum Schneidgasdruck ist. Durch diese druckproportionale, pneumatische Anfederung der Ventilhülse 10 wird ein Abheben der Ventilhülse 10 von der Werkstückoberfläche sicher verhindert. Das Zurückschieben der Ventilhülse 10 in Rückwärtsrichtung 22 erfolgt durch unterschiedlich weites Absenken der Schneidgasdüse 1 zum Werkstück 4, wodurch die Ventilhülse 10 auf der Werkstückoberfläche aufsetzt und dann in Rückwärtsrichtung 22 zurückgeschoben wird.

Bei der in Fign. 2a, 2b gezeigten Schneidgasdüse 1' umfasst der Düsenkörper 5 einen in den Laserbearbeitungskopf 2 einschraubbaren äußeren Düsenkörper 5a (z.B. aus Kupfer), der die Außenwand 12 des Ringspalts 11 bildet, und einen in den äußeren Düsenkörper 5a eingeschraubten, eingepressten oder eingeklebten inneren Düsenkörper 5b (z.B. aus Kupfer), der die Innendüse 6 aufweist und dessen Außenseite die Innenwand 13 des Ringspalts 11 bildet. Der Ventilsitz 14 ist durch einen in Rückwärtsrichtung 22 konisch zulaufenden vorderen Wandabschnitt 24 der Innenwand 13 gebildet und wirkt mit einer als Absatz geformten Innenkontur der Ventilhülse 10 oder mit einem Dichtring **23** zusammen, der an der hinteren Stirnseite der Ventilhülse 10 befestigt ist und den Ventilsitz 14 in Vorwärtsrichtung 20 hintergreift. Der Dichtring 23 bzw. der Absatz der Ventilhülse 10 hält die Ventilhülse 10 unverlierbar im Ringspalt 11. Der Ventilsitz 14 bildet zusammen mit der Ventilhülse 10 ein Ringspaltventil.

In der in Fig. 2a gezeigten vorderen Endstellung der Ventilhülse 10 ist die Ventilhülse 10 vom Werkstück 4 beabstandet und liegt mit dem Dichtring 23 auf dem Ventilsitz 14 dichtend an, wodurch das Ringspaltventil und damit die Düsenquerschnittsfläche 25 der Ringspaltdüse 8 verschlossen sind. Das aus dem Laserbearbeitungskopf 2 in die Schneidgasdüse 1' einströmende Schneidgas kann nur durch die zentrale Düsenaustrittsöffnung 100 der Innendüse 6 als Kernströmung 7 ausströmen. Diese Einlochdüse (Einkanaldüse) ist beim Einstechen des Laserstrahls 3 in das Werkstück 4 oder bei der Dünnblechbearbeitung erwünscht, wenn der Laserbearbeitungskopf 2 und damit die Innendüse 6 einen großen Abstand zur Werkstückoberfläche aufweisen.

Wenn die Ventilhülse 10 aus ihrer vorderen Endstellung durch ein Absenken des Bearbeitungskopfes 2 in Richtung Werkstückoberfläche 4 in Rückwärtsrichtung 22 in die in Fig. 2b gezeigte Stellung zurückgeschoben wird, hebt sie vom Ventilsitz 14 ab, und das Ringspaltventil öffnet, so dass das Schneidgas über die Verbindungsöffnungen 16 auch in den Ringspalt 11 und von dort durch die Düsenquerschnittsfläche 25 der Ringspaltdüse 8 als Ringströmung 9 ausströmt. Diese Nebenstromdüse (Mehrkanaldüse), bei der das Schneidgas sowohl aus der Düsenaustrittsöffnung 100 der Innendüse 6 als auch aus der Ringspaltdüse 8 ausströmt, ist vor allem beim Schneiden dicker Werkstücke erwünscht. In Fig. 2b ist die Ventilhülse 10 in Anlage am Werkstück 4 gezeigt, wobei der Abstand A der Innendüse 6 zum Werkstück 4 um den Verschiebeweg der Ventilhülse 10 kleiner als in der vorderen Endstellung der aufgesetzten Düse ist.

Die Ventilhülse 10 ist im gezeigten Beispiel so aufgebaut, dass sich im Betrieb unabhängig vom absoluten Gasdruckniveau die durch den Schneidgasdruck auf die Ventilhülse 10 wirkenden Auftriebs- und Anpresskräfte gerade die Waage halten, so dass die Ventilhülse 10 weitgehend reibungsfrei, aber trotzdem ständig flächig aufliegend über die (ebene) Werkstückoberfläche gleitet. Erreicht wird dies dadurch, dass derjenige Oberflächenteil der Ventilhülse 10, auf den der Schneidgasdruck in Vorwärtsrichtung 20 wirkt, gleich groß ist wie derjenige Oberflächenteil der Ventilhülse 10, auf den der Schneidgasdruck in Rückwärtsrichtung 22 wirkt. Im gezeigten Beispiel ist die durch Ventilhülse 10 und Dichtring 21 gebildete hintere Stirnfläche gleich groß wie die durch die innere Anlaufschräge 18a gebildete, vordere Stirnfläche (in der Projektion), die bei auf das Werkstück 4 aufgesetzter Ventilhülse 10 mit Schneidgasdruck beaufschlagt ist. Das Vorschieben der Ventilhülse 10 in Vorwärtsrichtung 20 erfolgt bei nicht auf das Werkstück 4 aufgesetzter Ventilhülse 10 durch den Schneidgasdruck. Das Zurückschieben der Ventilhülse 10 in Rückwärtsrichtung 22 erfolgt durch unterschiedlich weites Absenken der Schneidgasdüse 1 zum Werkstück 4, wodurch die Ventilhülse 10 auf der Werkstückoberfläche aufsetzt und in Rückwärtsrichtung 22 zurückgeschoben wird. Durch eine gezielte Änderung dieser Flächenverhältnisse kann ein definierter Schwebezustand der Ventilhülse 10 über dem Werkstück 4 unabhängig vom aktuellen Gasdruck erzielt werden, um so beispielsweise eine kratzerfreie Schneidbearbeitung zu ermöglichen.

Wenn nach dem Einstechen Ablagerungen aus Schlacke und erstarrten Metallspritzern auf der Werkstückoberfläche anhaften, so muss auf dem Weg des Laserstrahls 3 vom Einstechloch zum Beginn der eigentlichen Schneidkontur ein Bereich überwunden werden, welcher aufgrund der Verschmutzung der Werkstückoberfläche nicht dazu geeignet ist, die Ventilhülse 10 schon dort bündig auf das Werkstück 4 aufzusetzen. In diesem Übergangsbereich (genannt "Vorschnitt") zwischen Einstechposition und eigentlicher Schneidkontur wirkt sich die Möglichkeit zur NC-gesteuerten Umschaltung der Düsencharakteristik ebenfalls vorteilhaft aus: Im Bereich des Vorschnitts ist die Düsencharakteristik einer Einlochdüse (Einkanaldüse) günstiger für einen stabilen Schneidprozess, während beim Erreichen der eigentlichen Bauteilkontur auf die Nebenstrom-(Mehrkanal)-Charakteristik umgeschaltet werden kann, wenn dies für das Schneiden dicker Werkstücke günstiger ist.

Die Schneidgasdüse 1' weist beim Einstechen mit großem Abstand dieselben Eigenschaften auf wie eine klassische Einlochdüse (Einkanaldüse). Es wird daher keine zusätzliche Datenermittlung für Einstech-Prozessparameter erforderlich. Durch den kompakten Gasstrahl beim Einstechen, der nur durch die zentrale Öffnung 100 der Innendüse 6 austreten kann, ist die Schneidgasdüse 1' bestmöglich vor Verschmutzung durch Spritzer oder Rauch geschützt. Die Flugbahn und das Abkühlverhalten von Metallspritzern, welche aus dem Einstechloch herausgeschleudert werden, werden bestmöglich beeinflusst, so dass ein möglichst spritzerfreies Einstechen erreicht wird.

Die nahezu gasdichte Kapselung des Bereichs zwischen der Schneidgasdüse 1, 1' und der Werkstückoberfläche bei aufgesetzter Schneidgasdüse 1, 1'
- minimiert die Gasmenge, welche nicht in den Schneidspalt eindringt (= Nutzprozess), sondern horizontal über die Blechoberfläche aus der Prozesszone abströmt (= Verlustprozess),
- minimiert hierdurch den maschinenseitig maximal bereitzustellenden Schneidgasdruck bzw. die notwendige, maximale Schneidgasdurchflussmenge,
- minimiert die durch die Schneidgasdüse 1, 1' generierte Schallemission,
- ermöglicht durch die verbesserte Einkopplung des Schneidgases in den Schnittspalt bei gegebenen, maschinenseitigen Maximalgasdrücken das Schneiden noch größerer Blechdicken, und
- verhindert eine schädliche Vermischung des Schneidgases (z.B. hochreiner Sauerstoff) durch mit in den Schneidspalt eingesaugte Umgebungsluft.

Die "schwimmende" Kipplagerung der Ventilhülse 10 im Düsenkörper 5 erlaubt im laufenden Schneidbetrieb
- die NC-gesteuerte Variation des Düse-Blech-Abstandes A und dadurch
- die gezielte Veränderung der Strömungsverteilung innerhalb der Ventilhülse 10 und dadurch den flexiblen Einsatz der Schneidgasdüse 1, 1' sowohl als klassische Einlochdüse (Einkanaldüse) wie auch als verbrauchsminimierte Nebenstromdüse (Mehrkanaldüse),
- die automatische Kompensation unebener Werkstückoberflächen ohne Veränderung der Schneidgasdynamik und damit auch ohne Veränderung des Schneidergebnisses.

Statt wie gezeigt konisch kann der Ventilsitz 14 auch als ebener Ringabsatz, insbesondere am Grund des Ringspalts 11 gebildet sein.

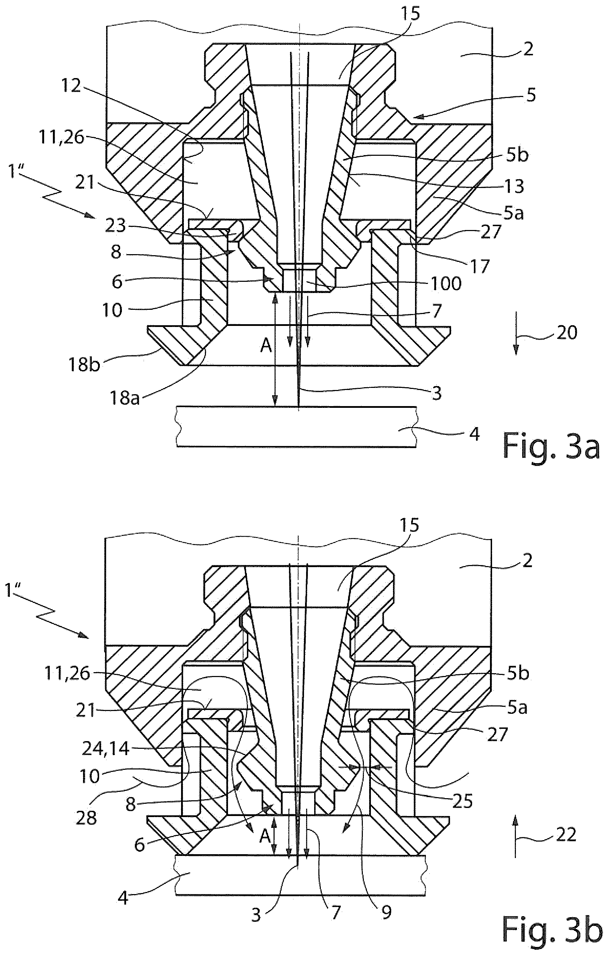

Von der Schneidgasdüse 1' der Fig. 2 unterscheidet sich die in **Fign. 3a, 3b** gezeigte Schneidgasdüse **1**" dadurch, dass die Düsenbohrung 15 der Innendüse 6 und der Ringspalt 11 der Ringspaltdüse 8 nicht miteinander verbunden sind, also keine Verbindungsbohrungen vorhanden sind, und dass ein zwischen der hinteren Stirnfläche 21 der Ventilhülse 10 und dem Düsenkörper 5 vorhandener Ringraum **26** über einen zwischen Düsenkörper 5 und Ventilhülse 10 vorhandenen Führungsspalt **27** mit der Außenumgebung verbunden ist. Auf die bei den Schneidgasdüsen 1, 1' gewünschte Abdichtung des Außendurchmessers der Ventilhülse 10 bzw. ihres Zentrierbundes 17 gegenüber der Umgebungsatmosphäre wird somit gezielt verzichtet.

Das Verhältnis zwischen hinterer und vorderer Hülsenstirnfläche ist so gewählt, dass die im Schneidbetrieb auf die Ventilhülse 10 wirkenden Gasdruckkräfte unabhängig vom verwendeten Schneidgasdruck einen definierten Schwebezustand der Ventilhülse 10 bewirken, so dass durch den definiert und reproduzierbar einstellbaren Spalt zwischen vorderer Hülsenstirnfläche und Werkstückoberfläche ein ausreichend hoher Verlustgasstrom aus der Ventilhülse 10 entweicht.

Alternativ hierzu kann auch durch das gezielte Einbringen von Gasabströmkanälen in die Hülsenstirnfläche oder auch von Gasabströmbohrungen in den zylindrischen Teil der Hülse ein ausreichend hoher Verlustgasstrom erzielt werden.

Wird die Schneidgasdüse 1" - ausgehend von ihrer in Fig. 3a gezeigten geschlossenen Ventilstellung - mit einem zunehmend geringeren Innendüsenabstand A zum Werkstück 4 betrieben, so hebt die Ventilhülse 10 vom Ventilsitz 14 ab und das Ringspaltventil öffnet zunehmend (Fig. 3b). Durch den Venturi-Effekt des aus der Innendüse 6 strömenden Schneidgases wird (zunehmend mehr) Luft (und damit Sauerstoff) **28** über den Führungsspalt 27 aus der Außenumgebung als Ringströmung 9 angesaugt, die sich innerhalb der Ventilhülse 10 mit dem Stickstoff-Schneidgasstrahl vermischt. Abhängig vom Innendüsenabstand A zum Werkstück 4 lässt sich auf diese Weise ein Fremdgasanteil in dem als Schneidgas genutzten Stickstoffstrom durch Sauerstoff aus der Umgebung gezielt einstellen. Die Schneidgasdüse 1" wirkt also als einstellbare Gasmischdüse. Über die richtige Wahl des Innendüsenabstands A zum Werkstück 4 kann eine Anpassung des resultierenden Sauerstoffanteils im Schneidgas an die Erfordernisse das aktuellen Schneidprozesses (abhängig von z.B. Laserleistung, Blechdicke, Walzhaut-Oberflächeneigenschaften) reproduzierbar und einstellbar erfolgen.

Mit Hilfe einer solchen einstellbaren Gasmischdüse können beispielsweise beim Schneiden von Aluminium mit CO₂-Laserstrahlung die Prozesseffizienz und -stabilität durch eine gesteuerte Beimischung von ca. 0,5-2% Sauerstoff aus der Umgebung in den hochreinen Stickstoff-Schneidgasstrahl gesteigert werden. Durch die Anwesenheit des geringen Prozentsatzes an Sauerstoff werden im Schneidprozess eine Erhöhung des Absorptionsgrades sowie eine Herabsetzung der Schmelzviskosität erzielt.

Soll keine Beimischung von Umgebungsluft erfolgen, so muss der Innendüsenabstand A zum Werkstück 4 so weit vergrößert werden, dass die Ventilhülse 10 auf dem konischen Ventilsitz 14 aufsetzt und so der Ringspalt 11 verschlossen wird (Fig. 3a). Auf diese Weise wird das Einkoppeln des hochreinen Schneidgasstrahls in den Schneidspalt mit minimaler Kontamination durch die Umgebungsatmosphäre ermöglicht. Dies ist vorteilhaft beispielsweise für das Schneiden oxidfreier Bauteile.

In einer weiteren, nicht gezeigten Variante kann die Gasdüse alternativ so ausgeführt sein, dass die Düsenbohrung 15 der Innendüse 6 und der Ringspalt 11 der Ringspaltdüse 8 nicht miteinander verbunden sind, also keine Verbindungsbohrungen vorhanden sind, und dass der zwischen der hinteren Stirnfläche 21 der Ventilhülse 10 und dem Düsenkörper 5 vorhandene Ringraum 26 nicht mit der Außenumgebung verbunden ist. In dieser Variante wirkt die Gasdüse immer als Einkanaldüse. Eine Variation der Strömungsverhältnisse ist mit einer solchen Gasdüse nicht möglich, aber die Einkopplung des Schneidgases in den Schneidspalt bzw. die Wirkung eines Schutzgases beim Schweißen wird verbessert.

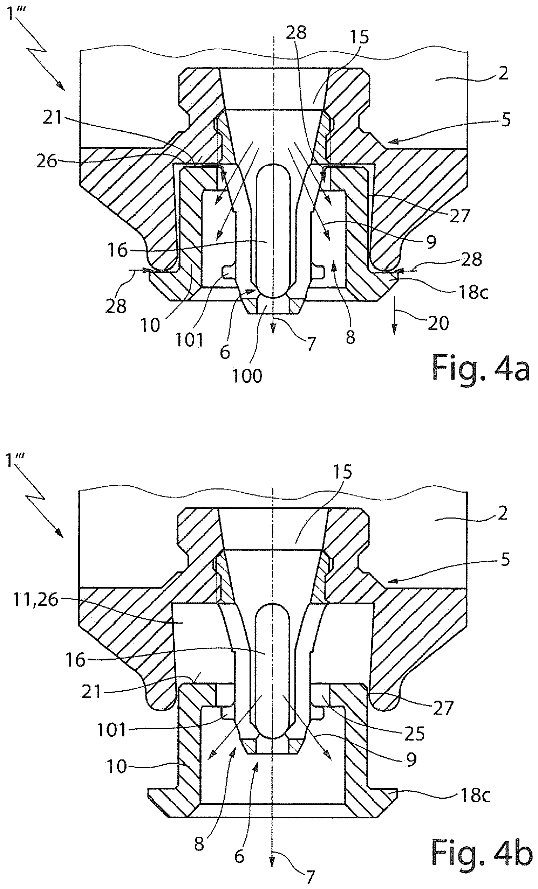

Von der Schneidgasdüse 1' der Fig. 2 unterscheidet sich die in **Fign. 4a, 4b** gezeigte Schneidgasdüse **1**"' dadurch, dass die Verbindungsöffnungen 16 als axiale Langlöcher ausgebildet sind, die in der hinteren Endstellung (Fig. 4a) bis zur vorderen Endstellung (Fig. 4b) der Hülse 10 die Düsenbohrung 15 der Innendüse 6 und den Ringspalt 11 der Ringspaltdüse 8 miteinander verbinden, und dass in der hinteren Endstellung der Hülse 10 zwischen der hinteren Stirnfläche 21 der Hülse 10 und dem Düsenkörper 5 ein Ringraum 26 verbleibt, der über einen zwischen Düsenkörper 5 und Hülse 10 vorhandenen Führungsspalt 27 mit der Außenumgebung verbunden ist. Durch die Verbindungslöcher 16 und durch den in jeder Hülsenstellung vorhandenen Ringraum 26 ist es möglich, die Hülse 10 aus einer vorgeschobenen Stellung durch eine gezielte Wahl des Gasdrucks in Rückwärtsrichtung 22 bis in ihre hintere Endstellung zu saugen. Die hintere Endstellung der Hülse 10 ist entweder durch Anlage der hinteren Hülsenstirnfläche an der konischen Außenseite der Innendüse 6 oder durch Anlage des vorderen Hülsenrands 18c am Düsenkörper 5 definiert.

Anders als die Schneidgasdüsen 1, 1', 1" weist die Hülse 10 der Schneidgasdüse 1"' keinen nach außen spitzen oder balligen Zentrierbund auf, sondern hier verjüngt sich die Außenwand 12 des Ringspalts 11, gebildet durch die Innenwand des Hauptkörpers 5a des Düsenkörpers 5, in Vorwärtsrichtung 20 konisch, um das Verkippen der Hülse 10 innerhalb des Ringspalts 11 um ca. ±5° zu ermöglichen. Alternativ oder zusätzlich kann sich auch die Hülsenwand außenseitig in Rückwärtsrichtung 22 insbesondere konisch verjüngen.

### Die Schneidgasdüse 1"' arbeitet dabei wie folgt:

Beim Einschalten des Schneidgasstroms wird zunächst ein Unterdruck im Ringraum 26 bzw. auf der hinteren Stirnfläche 21 der Hülse 10 erzeugt, durch den diese in den Düsenkörper 5 hinein bis in die hintere Endstellung gezogen wird, auch wenn die Hülse 10 keinen Kontakt zur Werkstückoberfläche hat. Bleibt der Gasdruck des Schneidgases kleiner als ein durch das Gewicht der Hülse 10 vorgegebener Grenzdruck (z.B. 3 bar), so bleibt die Hülse 10 eingesaugt. Dieser Zustand ist nutzbar zum Schutz der Hülse 10 vor Beschädigung oder Verschmutzung z.B. beim Einstechen, beim Einsatz der Düse zum Gravieren oder Kennzeichnen des Werkstücks oder bei der Düsenreinigung durch Bürsten - d.h. besonders bei Verfahren, bei denen mit großem Düsenabstand zum Werkstück 4 gearbeitet wird, aber trotzdem die Hülse 10 im Düsenkörper 5 in der hinteren Endstellung verbleiben soll.
Wird der Gasdruck über den Grenzdruck erhöht, so strömt das Schneidgas zunehmend turbulent durch den Ringspalt 8 zwischen Innendüse 6 und Hülse 10, wodurch die nach vorne gerichtete Kraftwirkung des Schneidgases ebenfalls zunimmt, so dass die Hülse 10 durch das Schneidgas in Vorwärtsrichtung 20 gedrückt wird.
Dieser Zustand wird beim Schneiden des Werkstücks 4 eingestellt, so dass die Hülse 10 Kontakt zur Werkstückoberfläche hat. Dies verhindert wirkungsvoll ein seitliches Abströmen des Schneidgases und ein Einsaugen von Umgebungsluft in den Schneidspalt. Auf diese Weise wird der Gasverbrauch reduziert und im Schneidspalt eine genau definierte Gaszusammensetzung erhalten, wodurch die Qualität der erhaltenen Schneidkanten signifikant verbessert wird.
Zum erneuten Einsaugen der Hülse 10 nach dem Schneidbetrieb muss der Gasdruck am Eingang 15 des Düsenkörpers 5 zunächst auf fast 0 bar reduziert oder ganz abgeschaltet werden. Ein erneutes Anheben des Gasdrucks auf knapp unterhalb den Grenzdruck bewirkt dann das Einsaugen der sich schwerkraftbedingt in ihrer vorderen Endstellung an Vorsprüngen **101** des Düsenkörpers 5 befindlichen Hülse 10 in ihre hintere Endstellung. Bei einem konstanten Gasdruck von unter dem Grenzdruck verbleibt die Hülse 10 permanent in ihrer hinteren Endstellung im Düsenkörper 5.

Statt wie in den Fign. 3 und 4 gezeigt über den Führungsspalt 27, kann Luft aus der Außenumgebung auch über eine Bohrung (nicht gezeigt) im Düsenkörper 5 angesaugt werden, die den Ringraum 26 mit der Außenumgebung verbindet.

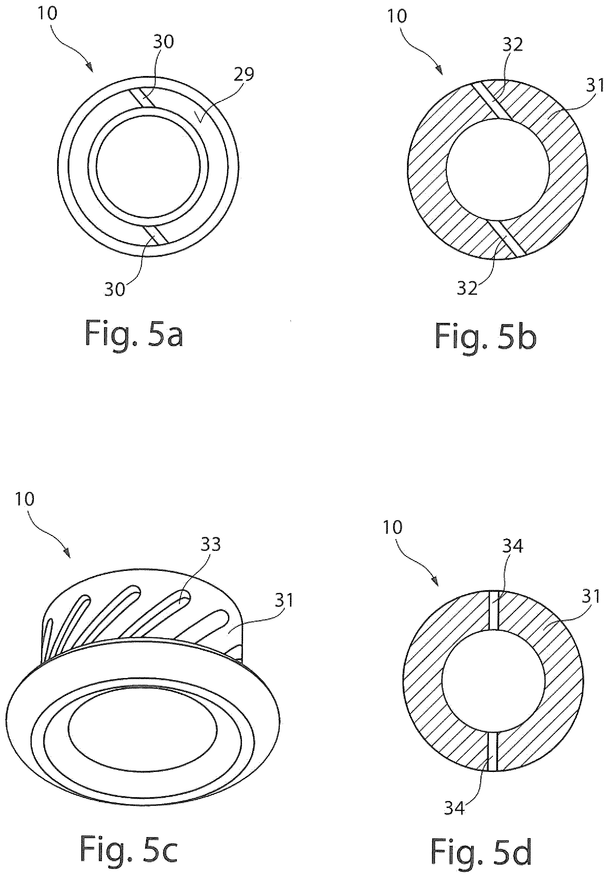

In **Fign. 5a-5d** sind verschiedene Modifikationen der Hülse 10 gezeigt.
Weist die Hülse 10 in ihrer vorderen Stirnfläche **29** mehrere, hier beispielhaft zwei, schräg zur Radialrichtung oder spiralförmig verlaufende Nuten **30** (Fig. 5a) oder in ihrer zylindrischen Hülsenwand **31** mehrere, hier beispielhaft zwei, schräg zur Radialrichtung verlaufende Bohrungen **32** (Fig. 5b) auf, so wird die Hülse 10 durch das in den Nuten 30 oder Bohrungen 32 von innen nach außen ausströmende Schneidgas in eine Rotation versetzt. Die Nuten 30 können sehr schmal und flach ausgeführt sein, so dass lediglich ein geringer Bruchteil des Schneidgases durch die Nuten 30 in die Umgebung abströmt. Durch die schräge bzw. spiralförmige Ausrichtung der Nuten 30 und der Bohrungen 32 übt der Impuls des abströmenden Schneidgases ein Drehmoment auf die Ventilhülse 10 aus, die dadurch in Rotation versetzt wird. Alternativ können in der zylindrischen Hülsenwand 31 außenseitig auch mehrere schräg zur Axialrichtung verlaufende Nuten **33** (Fig. 5c) vorhanden sein, so dass die Ventilhülse 10 durch die axial im Führungsspalt 27 strömende Luft 28 bzw. das Prozess- oder Schutzgas in Rotation versetzt wird. Zusätzlich zu den rotationsverursachenden Strukturen kann die Ventilhülse 10 in ihrer zylindrischen Hülsenwand 31 ein oder mehrere dünne Löcher 34 aufweisen.

### Die Rotation der Hülse 10 kann wie folgt vorteilhaft genutzt werden:

Wenn die Hülse 10 aus einem hoch abriebfesten Werkstoff, wie z.B. einer Oxidkeramik (Al2O3), hergestellt ist, kann die Hülse 10 mit ihrer vorderen Stirnfläche 29 - wie bei einem Dreh- oder Fräswerkzeug - in gewissem Umfang Verunreinigen der Werkstückoberfläche durch einen Impulsübertrag abtragen. Wenn sich die Hülse 10 in ständigem mechanischen Kontakt mit der Werkstückoberfläche befindet (Hülse 10 rotiert), dann können flächige Verunreinigungen, wie z.B. Öl- oder Zunderschichten, Farb- oder Klebstoffreste, Schmauchspuren, Metallperlen o.ä., entfernt werden. Durch den direkten mechanischen Kontakt kann die keramische Hülse 10 allerdings Kratzspuren auf der Werkstückoberfläche hinterlassen. Durch die Rotation der Hülse 10 werden außerdem die Haftreibung zwischen Hülse 10 und Werkstückoberfläche und der Verschleiß der Hülse 10 durch lokale Erwärmung vermindert.

Weist die Hülse 10 geometrische Strukturen, wie z. B. Nuten 30, in ihrer Stirnfläche 29 (Fig. 5a) oder Bohrungen 32, 34 in der Hülsenwand 31 (Fig. 5b,d) auf, durch die ein geringer Teil des Prozessgases lokal begrenzt aus dem Innenraum der Hülse 10 in die Umgebung ausströmen kann, so ermöglicht die Rotation der Hülse 10 eine gezielte Modulation des Prozessgasdrucks in der unter der Hülse 10 befindlichen Prozesszone (am Werkstück 4). Diese gezielt erzeugten Druckschwankungen wirken sich z. B. beim Laserschneiden positiv auf die Qualität der erzeugten Schneidkanten des Werkstücks 4 aus.

Statt aus Keramik kann die Hülse 10 auch aus Kunststoff gefertigt sein, der nicht so temperaturbeständig sein muss wie Keramik. Die besseren Gleiteigenschaften von Kunststoff haben den Vorteil, dass bei der Bewegung der Hülse 10 über das Werkstück die Bildung von Kratzern auf der Werkstückoberfläche vermindert oder ganz vermieden werden kann.

## Patentansprüche

1. Schneidgasdüse (1; 1'; 1"; 1"') für einen Laserbearbeitungskopf (2), mit einer Innendüse (6) zur Ausbildung einer Kernströmung (7) und mit einer die Innendüse (6) umgebenden Ringspaltdüse (8) zur Ausbildung einer Ringströmung (9),
**dadurch gekennzeichnet,**
**dass** in dem Ringspalt (11) der Ringspaltdüse (8) eine Hülse (10) axial verschiebbar zwischen einer hinteren und einer vorderen Stellung geführt ist, die zumindest in der vorderen Stellung über die Innendüse (6) vorsteht und die die Düsenquerschnittsfläche (25) der Ringspaltdüse (8) in den beiden Stellungen unterschiedlich weit freigibt.

2. Schneidgasdüse nach Anspruch 1, **dadurch gekennzeichnet, dass** die Hülse (10) in ihrer einen Stellung die Ringspaltdüse (8) zumindest weitgehend, insbesondere vollständig, verschließt und in ihrer anderen Stellung die Ringspaltdüse (8) freigibt.

3. Schneidgasdüse nach Anspruch 1 oder 2, **dadurch gekennzeichnet, dass** die Innendüse (6) und die Ringspaltdüse (8) in einem Düsenkörper (5) ausgebildet sind und dass die Düsenbohrung (15) der Innendüse (6) und der Ringspalt (11) der Ringspaltdüse (8) über mindestens eine Verbindungsöffnung (16) miteinander verbunden sind.

4. Schneidgasdüse nach Anspruch 3, **dadurch gekennzeichnet, dass** in der hinteren Stellung der Hülse (10) zwischen der hinteren Stirnfläche (21) der Hülse (10) und dem Düsenkörper (5) ein Ringraum (26) verbleibt, der, insbesondere über einen zwischen Düsenkörper (5) und Hülse (10) vorhandenen Führungsspalt (27), mit der Außenumgebung verbunden ist, und dass die mindestens eine Verbindungsöffnung (16) als eine sich bis in den Ringraum (26) erstreckende Öffnung ausgebildet ist.

5. Schneidgasdüse nach Anspruch 1 oder 2, **dadurch gekennzeichnet, dass** die Innendüse (6) und die Ringspaltdüse (8) in einem Düsenkörper (5) ausgebildet sind, wobei die Düsenbohrung (15) der Innendüse (6) und der Ringspalt (11) der Ringspaltdüse (8) nicht miteinander verbunden sind, und dass ein zwischen der hinteren Stirnfläche (21) der Hülse (10) und dem Düsenkörper (5) vorhandener Ringraum (26), insbesondere über einen zwischen Düsenkörper (5) und Hülse (10) vorhandenen Führungsspalt (27), mit der Außenumgebung verbunden ist.

6. Schneidgasdüse nach einem der vorgehenden Ansprüche, **dadurch gekennzeichnet, dass** die Innenwand (13) des Ringspalts (11) durch die Außenseite der Innendüse (6) gebildet ist und/oder dass die Hülse (10) an der Außenwand (12) des Ringspalts (11) verschiebbar geführt ist.

7. Schneidgasdüse nach einem der vorgehenden Ansprüche, **dadurch gekennzeichnet, dass** im Ringspalt (11) ein Ventilsitz (14) angeordnet ist, an dem die Hülse (10) in ihrer die Ringspaltdüse (8) verschließenden Stellung anliegt.

8. Schneidgasdüse nach Anspruch 7, **dadurch gekennzeichnet, dass** der Ventilsitz (14) in der hinteren Stellung der Hülse (10) geschlossen und in der vorderen Stellung der Hülse (10) geöffnet ist und insbesondere durch einen konischen Wandabschnitt oder einen Ringabsatz des Ringspalts (11) gebildet ist oder dass der Ventilsitz (14) in der vorderen Stellung der Hülse (10) geschlossen und in der hinteren Stellung der Hülse (10) geöffnet ist und insbesondere durch einen konischen Wandabschnitt (24) oder einen Ringabsatz des Ringspalts (11) gebildet ist, wobei die Hülse (10) eine den Ventilsitz (14) hintergreifende Dichtfläche aufweist.

9. Schneidgasdüse nach einem der vorgehenden Ansprüche, **dadurch gekennzeichnet, dass** die Hülse (10) im Ringspalt (11) verkippbar gelagert ist und insbesondere einen außen umlaufenden, spitzen oder balligen Zentrierbund (17) aufweist, der an der Außenwand (12) des Ringspalts (11) verschiebbar geführt und verkippbar gelagert ist.

10. Schneidgasdüse nach einem der vorhergehenden Ansprüche, **dadurch gekennzeichnet, dass** die vordere Stirnfläche der Hülse (10) innen- und/oder außenseitig eine Anlaufschräge (18a, 18b) aufweist.

11. Schneidgasdüse nach einem der vorgehenden Ansprüche, **dadurch gekennzeichnet, dass** die Hülse (10) aus Keramik oder einem vergleichbar temperaturbeständigen und elektrisch nichtleitenden Material oder einem bis mindestens 100 °C temperaturbeständigen Kunststoff gebildet ist.

12. Schneidgasdüse nach einem der vorgehenden Ansprüche, **dadurch gekennzeichnet, dass** die Hülse (10) in ihrer vorderen Stirnfläche (29) mindestens eine, bevorzugt mehrere schräg zur Radialrichtung verlaufende Nuten (30) oder in ihrer Hülsenwand (31) mindestens eine, bevorzugt mehrere schräg zur Radialrichtung verlaufende Bohrungen (32) aufweist.

13. Schneidgasdüse nach einem der vorgehenden Ansprüche, **dadurch gekennzeichnet, dass** die Hülse (10) in ihrer Hülsenwand (31) außenseitig mindestens eine, bevorzugt mehrere schräg zur Axialrichtung verlaufende Nuten (33) und/oder in ihrer Hülsenwand (31) mindestens eine, bevorzugt mehrere Bohrungen (34) aufweist.

14. Verfahren zum Laserschneiden eines Werkstücks (4) mit einer gasbeaufschlagten Schneidgasdüse (1; 1'; 1"; 1"') nach einem der vorhergehenden Ansprüche, wobei ein Laserstrahl (3) durch die Innendüse (6) auf das Werkstück (4) gerichtet wird und die Hülse (10) in eine Arbeitsstellung mechanisch oder pneumatisch verschoben wird, wobei insbesondere die Hülse (10) durch den Schneidgasdruck in einer Vorwärtsrichtung (20) vorgeschoben und durch unterschiedlich weites Absenken der Schneidgasdüse (1) auf das Werkstück (4) in einer Rückwärtsrichtung (22) zurückgeschoben wird.

15. Verfahren nach Anspruch 14 mit einer Schneidgasdüse (1") nach Anspruch 5, **dadurch gekennzeichnet, dass** bei freigegebener Düsenquerschnittsfläche (25) der Ringspaltdüse (8) Umgebungsluft von der Kernströmung (7) in den Ringraum (26) gesaugt wird, die dann zusammen mit der Kernströmung (7) aus der Schneidgasdüse (1") austritt.

## Claims

1. A cutting gas nozzle (1; 1'; 1"; 1"') for a laser machining head (2), comprising an inner nozzle (6) for forming a core flow (7) and an annular gap nozzle (8), surrounding the inner nozzle (6), for forming an annular flow (9),
**characterized in that**
a sleeve (10) is guided in the annular gap (11) of the annular gap nozzle (8) so as to be axially displaceable between a rearward position and a forward position, said sleeve (10) at least in the forward position projecting beyond the inner nozzle (6) and said sleeve (10) in the two positions opening the nozzle cross-sectional area (25) of the annular gap nozzle (8) to a variable degree.

2. The cutting gas nozzle as claimed in claim 1, **characterized in that** the sleeve (10) in the one position thereof closes the annular gap nozzle (8) at least largely, in particular completely, and in the other position thereof opens the annular gap nozzle (8).

3. The cutting gas nozzle as claimed in claim 1 or 2, **characterized in that** the inner nozzle (6) and the annular gap nozzle (8) are provided in a nozzle body (5), and **in that** the nozzle bore (15) of the inner nozzle (6) and the annular gap (11) of the annular gap nozzle (8) are interconnected by way of at least one connection opening (16).

4. The cutting gas nozzle as claimed in claim 3, **characterized in that** in the rearward position of the sleeve (10) an annular space (26) which is connected to the environment in particular by way of a guide gap (27) that is provided between the nozzle body (5) and the sleeve (10), remains between the rear end face (21) of the sleeve (10) and the nozzle body (5), and **in that** the at least one connection opening (16) is formed as an opening that extends into the annular space (26).

5. The cutting gas nozzle as claimed in claim 1 or 2, **characterized in that** the inner nozzle (6) and the annular gap nozzle (8) are formed in a nozzle body (5), wherein the nozzle bore (15) of the inner nozzle (6) and the annular gap (11) of the annular gap nozzle (8) are not interconnected, and **in that** an annular space (26) that is provided between the rear end face (21) of the sleeve (10) and the nozzle body (5) is connected to the environment in particular by way of a guide gap (27) that is provided between the nozzle body (5) and the sleeve (10).

6. The cutting gas nozzle as claimed in one of the preceding claims, **characterized in that** the internal wall (13) of the annular gap (11) is formed by the external side of the inner nozzle (6) and/or that the sleeve (10) is guided so as to be displaceable on the external wall (12) of the annular gap (11).

7. The cutting gas nozzle as claimed in one of the preceding claims, **characterized in that** a valve seat (14), on which the sleeve (10) **in that** position thereof that closes the annular gap nozzle (8) bears, is disposed in the annular gap (11).

8. The cutting gas nozzle as claimed in claim 7, **characterized in that** the valve seat (14) is closed in the rearward position of the sleeve (10) and is open in the forward position of the sleeve (10), and in particular is formed by a conical wall portion or by an annular shoulder of the annular gap (11), or that the valve seat (14) is closed in the forward position of the sleeve (10) and is open in the rearward position of the sleeve (10), and in particular is formed by a conical wall portion (24) or by an annular shoulder of the annular gap (11), wherein the sleeve (10) has a sealing face that engages behind the valve seat (14).

9. The cutting gas nozzle as claimed in one of the preceding claims, **characterized in that** the sleeve (10) is mounted so as to be tiltable in the annular gap (11), and in particular has an externally encircling pointed or spherical centering bead (17) which is guided so as to be displaceable and mounted so as to be tiltable on the external wall (12) of the annular gap (11).

10. The cutting gas nozzle as claimed in one of the preceding claims, **characterized in that** the front end face of the sleeve (10) has a run-up slant (18a, 18b) on the internal and/or external side.

11. The cutting gas nozzle as claimed in one of the preceding claims, **characterized in that** the sleeve (10) is formed from ceramics or from a comparably temperature-resistant and electrically non-conducting material or from a plastic material that is temperature resistant up to at least 100°C.

12. The cutting gas nozzle as claimed in one of the preceding claims, **characterized in that** the sleeve (10) in the front end face (29) thereof has at least one groove (30), preferably a plurality of grooves (30) that run(s) obliquely to the radial direction, or in the sleeve wall (31) thereof has at least one bore (32), preferably a plurality of bores (32) that run(s) obliquely to the radial direction.

13. The cutting gas nozzle as claimed in one of the preceding claims, **characterized in that** the sleeve (10) in the sleeve wall (31) thereof on the external side has at least one groove (33), preferably a plurality of grooves (33) that run(s) obliquely to the axial direction, and/or in the sleeve wall (31) thereof has at least one bore (34), preferably a plurality of bores (34).

14. A method for laser cutting a workpiece (4) with a gas-pressurized cutting gas nozzle (1; 1'; 1"; 1"') as claimed in one of the preceding claims, wherein a laser beam (3) is directed through the inner nozzle (6) onto the workpiece (4), and the sleeve (10) is displaced to an operating position mechanically or pneumatically, wherein in particular the sleeve (10) is advanced in a forward direction (20) by the cutting gas pressure, and is reversed in a reverse direction (22) on account of the cutting gas nozzle (1) being lowered in a variable manner onto the workpiece (4).

15. The method as claimed in claim 14, comprisind a cutting gas nozzle (1") as claimed in claim 5, **characterized in that** in the case of an opened nozzle cross-sectional area (25) of the annular gap nozzle (8), ambient air is suctioned from the core flow (7) into the annular space (26), said ambient air then exiting the cutting gas nozzle (1") conjointly with the core flow (7).

## Revendications

1. Buse à gaz de coupe (1 ; 1' ; 1"; 1"') pour une tête d'usinage au laser (2), comportant une buse intérieure (6) pour former un écoulement central (7) et une buse à fente annulaire (8) entourant la buse intérieure (6) pour former un écoulement annulaire (9),
**caractérisée en ce**
**qu'**une douille (10) est guidée dans la fente annulaire (11) de la buse à fente annulaire (8) de manière à pouvoir coulisser axialement entre une position arrière et une position avant, laquelle douille fait saillie au-delà de la buse intérieure (6) au moins dans la position avant et libère plus ou moins largement la surface de section transversale de buse (25) de la buse à fente annulaire (8) dans les deux positions.

2. Buse à gaz de coupe selon la revendication 1, **caractérisée en ce que**, dans une de ses positions, la douille (10) ferme au moins en grande partie, en particulier complètement, la buse à fente annulaire (8) et, dans son autre position, libère la buse à fente annulaire (8).

3. Buse à gaz de coupe selon la revendication 1 ou 2, **caractérisée en ce que** la buse intérieure (6) et la buse à fente annulaire (8) sont formées dans un corps de buse (5) et **en ce que** l'orifice de buse (15) de la buse intérieure (6) et la fente annulaire (11) de la buse à fente annulaire (8) sont reliés entre eux par au moins une ouverture de liaison (16).

4. Buse à gaz de coupe selon la revendication 3, **caractérisée en ce que** dans la position arrière de la douille (10), il reste entre la face frontale arrière (21) de la douille (10) et le corps de buse (5) un espace annulaire (26) qui est relié à l'environnement extérieur, en particulier par une fente de guidage (27) prévue entre le corps de buse (5) et la douille (10), et **en ce que** ladite au moins une ouverture de liaison (16) est réalisée sous la forme d'une ouverture s'étendant jusque dans l'espace annulaire (26).

5. Buse à gaz de coupe selon la revendication 1 ou 2, **caractérisée en ce que** la buse intérieure (6) et la buse à fente annulaire (8) sont formées dans un corps de buse (5), l'orifice de buse (15) de la buse intérieure (6) et la fente annulaire (11) de la buse à fente annulaire (8) n'étant pas reliés entre eux, et **en ce qu'**un espace annulaire (26) prévu entre la face frontale arrière (21) de la douille (10) et le corps de buse (5) est relié à l'environnement extérieur, en particulier par l'intermédiaire d'une fente de guidage (27) prévue entre le corps de buse (5) et la douille (10).

6. Buse à gaz de coupe selon l'une des revendications précédentes, **caractérisée en ce que** la paroi intérieure (13) de la fente annulaire (11) est formée par la face extérieure de la buse intérieure (6) et/ou **en ce que** la douille (10) est guidée de manière à pouvoir coulisser sur la paroi extérieure (12) de la fente annulaire (11).

7. Buse à gaz de coupe selon l'une des revendications précédentes, **caractérisée en ce qu'**un siège de soupape (14) est disposé dans la fente annulaire (11), contre lequel s'applique la douille (10) dans la position dans laquelle elle ferme la buse à fente annulaire (8).

8. Buse à gaz de coupe selon la revendication 7, **caractérisée en ce que** le siège de soupape (14) est fermé dans la position arrière de la douille (10) et ouvert dans la position avant de la douille (10) et est formé en particulier par une partie de paroi conique ou un épaulement annulaire de la fente annulaire (11) ou **en ce que** le siège de soupape (14) est fermé dans la position avant de la douille (10) et ouvert dans la position arrière de la douille (10) et est formé en particulier par une partie de paroi conique (24) ou un épaulement annulaire de la fente annulaire (11), la douille (10) présentant une surface d'étanchéité venant se plaquer derrière le siège de soupape (14).

9. Buse à gaz de coupe selon l'une des revendications précédentes, **caractérisée en ce que** la douille (10) est montée de manière à pouvoir basculer dans la fente annulaire (11) et présente en particulier un collet de centrage (17) périphérique extérieur pointu ou bombé, qui est guidé de manière à pouvoir coulisser sur la paroi extérieure (12) de la fente annulaire (11) et est monté de manière à pouvoir basculer.

10. Buse à gaz de coupe selon l'une des revendications précédentes, **caractérisée en ce que** la face frontale avant de la douille (10) présente un biais d'attaque (18a, 18b) du côté intérieur et/ou extérieur.

11. Buse à gaz de coupe selon l'une des revendications précédentes, **caractérisée en ce que** la douille (10) est formée de céramique ou d'un matériau résistant à la température et électriquement non conducteur comparable ou d'une matière plastique résistante à la température jusqu'à au moins 100 °C.

12. Buse à gaz de coupe selon l'une des revendications précédentes, **caractérisée en ce que** la douille (10) présente dans sa face frontale avant (29) au moins une, de préférence plusieurs rainures (30) s'étendant obliquement par rapport à la direction radiale ou dans sa paroi de douille (31) au moins un, de préférence plusieurs orifices (32) s'étendant obliquement par rapport à la direction radiale.

13. Buse à gaz de coupe selon l'une des revendications précédentes, **caractérisée en ce que** la douille (10) présente extérieurement dans sa paroi de douille (31) au moins une, de préférence plusieurs rainures (33) s'étendant obliquement par rapport à la direction axiale et/ou dans sa paroi de douille (31) au moins un, de préférence plusieurs orifices (34).

14. Procédé de coupe au laser d'une pièce (4) avec une buse à gaz de coupe (1 ; 1' ; 1" ; 1"') selon l'une des revendications précédentes, dans lequel un faisceau laser (3) est dirigé sur la pièce (4) à travers la buse intérieure (6) et la douille (10) est déplacée mécaniquement ou pneumatiquement dans une position de travail, dans lequel, en particulier, la douille (10) est avancée par la pression du gaz de coupe dans une direction avant (20) et repoussée dans une direction arrière (22) par abaissement plus ou moins prononcé de la buse à gaz de coupe (1) sur la pièce (4).

15. Procédé selon la revendication 14 avec une buse à gaz de coupe (1") selon la revendication 5, **caractérisé en ce que** lorsque la surface de section transversale de buse (25) de la buse annulaire (8) est libérée, de l'air ambiant est aspiré par l'écoulement central (7) dans l'espace annulaire (26), lequel sort alors de la buse à gaz de coupe (1") conjointement avec l'écoulement central (7).
